(19) 

Europäisches
Patentamt
European
Patent Office
Office européen
des brevets

(11) **EP 2 299 396 A1**

(12) **EUROPEAN PATENT APPLICATION**

(43) Date of publication:
   **23.03.2011 Bulletin 2011/12**

(51) Int Cl.:
   **G06Q 30/00** (2006.01)

(21) Application number: **10010339.9**

(22) Date of filing: **21.07.2004**

(84) Designated Contracting States:
   **AT BE BG CH CY CZ DE DK EE ES FI FR GB GR
   HU IE IT LI LU MC NL PL PT RO SE SI SK TR**

(30) Priority: **22.07.2003 US 489322 P
            27.08.2003 US 649585**

(62) Document number(s) of the earlier application(s) in
   accordance with Art. 76 EPC:
   **04778599.3 / 1 652 045**

(71) Applicant: **Google Inc.
   Mountain View, CA 94043 (US)**

(72) Inventors:
   • **Cui Yingwei, Claire
     Los Altos, CA 94024 (US)**

   • **Carobus, Alexander P.
     Los Altos, CA 94022 (US)**
   • **Jindal, Deepak
     Los Altos, California 94024 (US)**
   • **Lawrence, Stephen
     Palo Alto, CA 94306 (US)**
   • **Shivakumar, Narayanan
     San Jose, CA 95131 (US)**

(74) Representative: **von Hellfeld, Axel
   Wuesthoff & Wuesthoff
   Patent- und Rechtsanwälte
   Schweigerstrasse 2
   81541 München (DE)**

(54) **Improving content-targeted advertising using collected user behavior data**

(57)   A content-targeting ad system is provided with a user behavior (e.g., selection (e.g., click), conversion, etc.) feedback mechanism. The performance of individual ads, or groups of ads, may be tracked on a per document (e.g. per URL) and/or on a per host (e.g. per Website) basis. The performance of ad targeting functions may also be tracked on a per document, and/or per host basis. Such user behavior feedback data may be processed (e.g., aggregated) into useful data structures. Such user behavior feedback data (raw or processed) may then be used in a content-targeting ad system to improve ad quality, improve user experience, and/or maximize revenue.

EP 2 299 396 A1

**Description**

## § 0. RELATED APPLICATION

This application claims the benefit of U.S. Provisional Application Serial No. 60/489,322, (incorporated herein by reference) "entitled "COLLECTING USER BEHAVIOR DATA SUCH AS CLICK DATA, GENERATING USER BEHAVIOR DATA REPRESENTATIONS, AND USING USER BEHAVIOR DATA FOR CONCEPT REINFORCEMENT FOR CONTENT-BASED AD TARGETING," filed on July 22, 2003 and listing Alex Carobus, Claire Cui, Deepak Jindal, Steve Lawrence and Narayanan Shivakumar as inventors.

The present invention is not limited to any specific embodiments described in that provisional.

## § 1. BACKGROUND OF THE INVENTION

### § 1.1 FIELD OF THE INVENTION

The present invention concerns advertising. In particular, the present invention concerns improving content-targeted advertising.

### § 1.2 RELATED ART

*Traditional Advertising*

Advertising using traditional media, such as television, radio, newspapers and magazines, is well known. Unfortunately, even when armed with demographic studies and entirely reasonable assumptions about the typical audience of various media outlets, advertisers recognize that much of their ad budget is simply wasted. Moreover, it is very difficult to identify and eliminate such waste.

*Online Advertising*

Recently, advertising over more interactive media has become popular. For example, as the number of people using the Internet has exploded, advertisers have come to appreciate media and services offered over the Internet as a potentially powerful way to advertise.

Advertisers have developed several strategies in an attempt to maximize the value of such advertising. In one strategy, advertisers use popular presences or means for providing interactive media or services (referred to as "Websites" in the specification without loss of generality) as conduits to reach a large audience. Using this first approach, an advertiser may place ads on the home page of the New York Times Website, or the USA Today Website, for example. In another strategy, an advertiser may attempt to target its ads to more narrow niche audiences, thereby increasing the likelihood of a positive response by the audience. For example, an agency promoting tourism in the Costa Rican rainforest might place ads on the ecotourism-travel subdirectory of the Yahoo Website. An advertiser will normally determine such targeting manually.

Regardless of the strategy, Website-based ads (also referred to as "Web ads") are often presented to their advertising audience in the form of "banner ads" - i.e., a rectangular box that includes graphic components. When a member of the advertising audience (referred to as a "viewer" or "user" in the Specification without loss of generality) selects one of these banner ads by clicking on it, embedded hypertext links typically direct the viewer to the advertiser's Website. This process, wherein the viewer selects an ad, is commonly referred to as a "click-through" ("Click-through" is intended to cover any user selection.). The ratio of the number of click-throughs to the number of impressions of the ad (i.e., the number of times an ad is displayed) is commonly referred to as the "click-through rate" or "CTR" of the ad.

A "conversion" is said to occur when a user consummates a transaction related to a previously served ad. What constitutes a conversion may vary from case to case and can be determined in a variety of ways. For example, it may be the case that a conversion occurs when a user clicks on an ad, is referred to the advertiser's web page, and consummates a purchase there before leaving that web page. Alternatively, a conversion may be defined as a user being shown an ad, and making a purchase on the advertiser's web page within a predetermined time (e.g., seven days). In yet another alternative, a conversion may be defined by an advertiser to be any measurable/observable user action such as, for example, downloading a white paper, navigating to at least a given depth of a Website, viewing at least a certain number of Web pages, spending at least a predetermined amount of time on a Website or Web page, etc. Often, if user actions don't indicate a consummated purchase, they may indicate a sales lead, although user actions constituting a conversion are not limited to this. Indeed, many other definitions of what constitutes a conversion are possible. The ratio of the number of conversions to the number of impressions of the ad (i.e., the number of times an ad is displayed) is commonly referred to as the conversion rate. If a conversion is defined to be able to occur within a predetermined time since the serving of an ad, one possible definition of the conversion rate might only consider ads that have been served more than the predetermined time in the past.

Despite the initial promise of Website-based advertisement, there remain several problems with existing approaches. Although advertisers are able to reach a large audience, they are frequently dissatisfied with the return on their advertisement investment. Some have attempted to improve ad performance by tracking the online habits of users, but this approach has led to privacy concerns.

*Online Keyword-Targeted Advertising*

Similarly, the hosts of Websites on which the ads are presented (referred to as "Website hosts" or "ad consumers") have the challenge of maximizing ad revenue without impairing their users' experience. Some Website hosts have chosen to place advertising revenues over the interests of users. One such Website is "Overture.com," which hosts a so-called "search engine" service returning advertisements masquerading as "search results" in response to user queries. The Overture.com Website permits advertisers to pay to position an ad for their Website (or a target Website) higher up on the list of purported search results. If such schemes where the advertiser only pays if a user clicks on the ad (i.e., cost-per-click) are implemented, the advertiser lacks incentive to target their ads effectively, since a poorly targeted ad will not be clicked and therefore will not require payment. Consequently, high cost-per-click ads show up near or at the top, but do not necessarily translate into real revenue for the ad publisher because viewers don't click on them. Furthermore, ads that viewers would click on are further down the list, or not on the list at all, and so relevancy of ads is compromised.

Search engines, such as Google for example, have enabled advertisers to target their ads so that they will be rendered in conjunction with a search results page responsive to a query that is relevant, presumably, to the ad. The Google system tracks click-through statistics (which is a performance parameter) for ads and keywords. Given a search keyword, there are a limited number of keyword targeted ads that could be shown, leading to a relatively manageable problem space. Although search result pages afford advertisers a great opportunity to target their ads to a more receptive audience, search result pages are merely a fraction of page views of the World Wide Web.

*Online Content-Targeted Advertising*

Some online advertising systems may use ad relevance information and document content relevance information (e.g., concepts or topics, feature vectors, etc.) to "match" ads to (and/or to score ads with respect to) a document including content, such as a Web page for example. Examples of such online advertising systems are described in:

- U.S. Provisional Application Serial No. 60/413,536 (incorporated herein by reference), entitled "METHODS AND APPARATUS FOR SERVING RELEVANT ADVERTISEMENTS," filed on September 24, 2002 and listing Jeffrey A. Dean, Georges R. Harik and Paul Bucheit as inventors;
- U.S. Patent Application Serial No. 10/314,427 (incorporated herein by reference), entitled "METHODS AND APPARATUS FOR SERVING RELEVANT ADVERTISEMENTS," filed on December 6, 2002 and listing Jeffrey A. Dean, Georges R. Harik and Paul Bucheit as inventors;
- U.S. Patent Application Serial No. 10/375,900 (incorporated herein by reference), entitled "SERVING ADVERTISEMENTS BASED ON CONTENT," filed on February 26, 2003 and listing Darrell Anderson, Paul Bucheit, Alex Carobus, Claire Cui, Jeffrey A. Dean, Georges R. Harik, Deepak Jindal, and Narayanan Shivakumar as inventors; and
- U.S. Patent Application Serial No. 10/452,830 (incorporated herein by reference), entitled "SERVING ADVERTISEMENTS USING INFORMATION ASSOCIATED WITH E-MAIL," filed on June 2, 2003 and listing Jeffrey A. Dean, Georges R. Harik and Paul Bucheit as inventors.

Generally, such online advertising systems may use relevance information of both candidate advertisements and a document to determine a score of each ad relative to the document. The score may be used to determine whether or not to serve an ad in association with the document (also referred to as eligibility determinations), and/or to determine a relative attribute (e.g., screen position, size, etc.) of one or more ads to be served in association with the document. The determination of the score may also use, for example, one or more of (1) one or more performance parameters (e.g., click-through rate, conversion rate, user ratings, etc.) of the ad, (2) quality information about an advertiser associated with the ad, and (3) price information (e.g., a maximum price per result (e.g., per click, per conversion, per impression, etc.)) associated with the ad.

*The Need to Improve Online Content- Targeted Advertising*

A given document, such as a Web page for example, may be relevant to a number of different concepts or topics. However, users requesting a document, in the aggregate, may generally be more interested in one relevant topic or concept than others. Therefore, when serving ads, it would be useful to give preference to ads relevant to the topic or concept of greater general interest, than ads relevant to less popular topics or concepts. This is less of a challenge in the context of keyword-targeted advertisements served with search results pages, since a user's interest can often be discerned from his or her search query. A user's interest in a requested document is much more difficult to discern, particularly when the document has two or more relevant topics or concepts.

## § 2. SUMMARY OF THE INVENTION

The present invention provides a user behavior (e.g., selection (e.g., click), conversion, etc.) feedback mechanism for a content-targeting ad system. The present invention may track the performance of individual ads, or groups of ads, on a per document (e.g. per URL) and /or per host (e.g. per Website) basis. The present invention may process (e.g., aggregate) such user behavior feedback data into useful data structures. The present invention may also track the performance of ad targeting functions on a per document, and/or per host basis. The present invention may use such user behavior feedback data (raw or processed) in a content-targeting ad system to improve ad quality, improve user experience, and/or maximize revenue.

## § 3. BRIEF DESCRIPTION OF THE DRAWINGS

Figure 1 is a high-level diagram showing parties or entities that can interact with an advertising system.
Figure 2 is a diagram illustrating an environment in which, or with which, the present invention may operate.
Figure 3A is a bubble diagram of content-targeted ad serving environment in which, or with which, the present invention may be used. Figure 3B is a bubbled diagram of an alternate ad serving technique.
Figure 4 is a bubble diagram of a first embodiment of the present invention in an environment such as that of Figure 3A.
Figure 5 is a bubble diagram of a second embodiment of the present invention in an environment such as that of Figure 3B.
Figure 6 is a bubble diagram illustrating a post-ad scoring application of the present invention.
Figure 7 is a bubble diagram illustrating a pre-ad scoring application of the present invention.
Figure 8 is a bubble diagram illustrating an application of the present invention to ad scoring.
Figure 9 is a flow diagram of an exemplary method for collecting and aggregating data in a manner consistent with the present invention.
Figure 10 is a flow diagram of an exemplary method for expanding a set of candidate ads in a manner consistent with the present invention.
Figure 11 is a flow diagram of an exemplary method for adjusting an ad score in a manner consistent with the present invention.
Figure 12 is a flow diagram of an exemplary method for adjusting (temporarily) ad performance information in a manner consistent with the present invention.
Figure 13A and 13B are flow diagrams of exemplary methods for document specific or host specific scoring of ads in a manner consistent with the present invention.
Figure 14 is a flow diagram of an exemplary method for estimating and/or adjusting ad performance information in a manner consistent with the present invention.
Figure 15 is a diagram illustrating an example of the operation of the method of Figure 14.
Figure 16 is a block diagram of apparatus that may be used to effect at least some of the various operations that may be performed and store at least some of the information that may be used and/or generated consistent with the present invention.

## § 4. DETAILED DESCRIPTION

The present invention may involve novel methods, apparatus, message formats and/or data structures for improving content-targeted advertising. The following description is presented to enable one skilled in the art to make and use the invention, and is provided in the context of particular applications and their requirements. Various modifications to the disclosed embodiments will be apparent to those skilled in the art, and the general principles set forth below may be applied to other embodiments and applications. Thus, the present invention is not intended to be limited to the embodiments shown and the inventors regard their invention as any patentable subject matter described.

In the following, environments in which, or with which, the present invention may operate are described in § 4.1. Then, exemplary embodiments of the present invention are described in § 4.2. Finally, some conclusions regarding the present invention are set forth in § 4.3.

### § 4.1 ENVIRONMENTS IN WHICH, OR WITH WHICH, THE PRESENT INVENTION MAY OPERATE

### § 4.1.1 EXEMPLARY ADVERTISING ENVIRONMENT

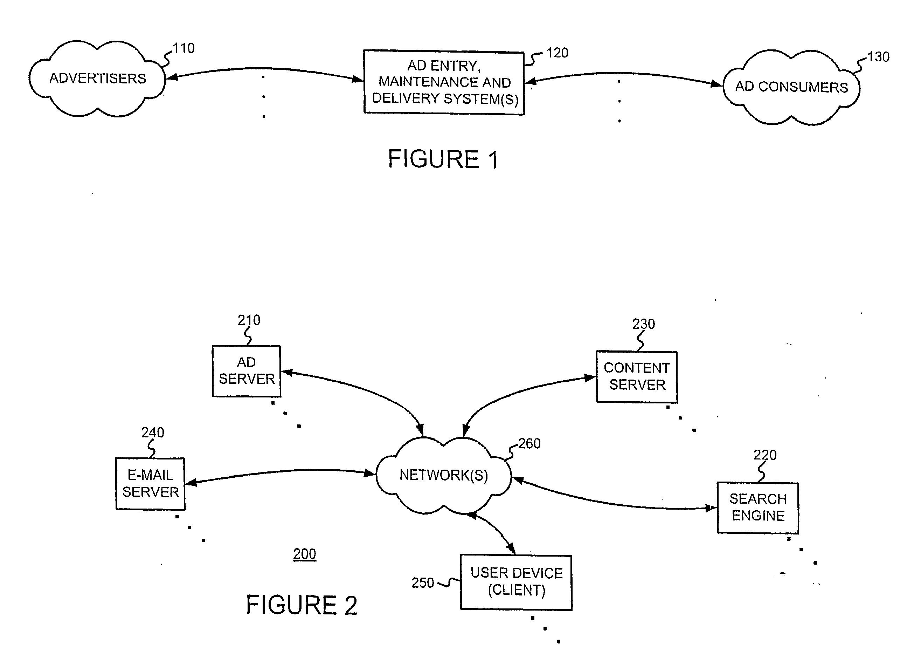

Figure 1 is a high level diagram of an advertising environment. The environment may include an ad entry, maintenance and delivery system (simply referred to an ad server) 120. Advertisers 110 may directly, or indirectly, enter, maintain, and track ad information in the system 120. The ads may be in the form of graphical ads such as so-called banner ads, text only ads, image ads, audio ads, video ads, ads combining one of more of any of such components, etc. The ads may also include embedded information, such as a link, and/or machine executable instructions. Ad consumers 130 may submit requests for ads to, accept ads responsive to their request from, and provide usage information to, the system 120. An entity other than an ad consumer 130 may initiate a request for ads. Although not shown, other entities may provide usage information (e.g., whether or not a conversion or click-through related to the ad occurred) to the system 120. This usage information may include measured or observed user behavior related to ads that have been served.

The ad server 120 may be similar to the one described in Figure 2 of U.S. Patent Application Serial No. 10/375,900, mentioned in § 1.2 above. An advertising program may include information concerning accounts, campaigns, creatives, targeting, etc. The term "account" relates to information for a given advertiser (e.g., a unique e-mail address, a password, billing information, etc.). A "campaign" or "ad campaign" refers to one or more groups of one or more advertisements, and may include a start date, an end date, budget information, geo-targeting information, syndication information, etc. For example, Honda may have one advertising campaign for its automotive line, and a separate advertising campaign for its motorcycle line. The campaign for its automotive line have one or more ad groups, each containing one or more ads. Each ad group may include targeting information (e.g., a set of keywords, a set of one or more topics, etc.), and price information (e.g., maximum cost (cost per click-though, cost per conversion, etc.)). Alternatively, or in addition, each ad group may include an average cost (e.g., average cost per click-through, average cost per conversion, etc.). Therefore, a single maximum cost and/or a single average cost may be associated with one or more keywords, and/or topics. As stated, each ad group may have one or more ads or "creatives" (That is, ad content that is ultimately rendered to an end user.). Each ad may also include a link to a URL (e.g., a landing Web page, such as the home page of an advertiser, or a Web page associated with a particular product or server). Naturally, the ad information may include more or less information, and may be organized in a number of different ways.

Figure 2 illustrates an environment 200 in which the present invention may be used. A user device (also referred to as a "client" or "client device") 250 may include a browser facility (such as the Explorer browser from Microsoft, the Opera Web Browser from Opera Software of Norway, the Navigator browser from AOL/Time Warner, etc.), an e-mail facility (e.g., Outlook from Microsoft), etc. A search engine 220 may permit user devices 250 to search collections of documents (e.g., Web pages). A content server 210 may permit user devices 250 to access documents. An e-mail server (such as Hotmail from Microsoft Network, Yahoo Mail, etc.) 240 may be used to provide e-mail functionality to user devices 250. An ad server 210 may be used to serve ads to user devices 250. The ads may be served in association with search results provided by the search engine 220. Content-relevant (also referred to as "content-targeted") ads may also be served in association with content provided by the content server 230, and/or e-mail supported by the e-mail server 240 and/or user device e-mail facilities.

As discussed in U.S. Patent Application Serial No. 10/375,900 (introduced above), ads may be targeted to documents served by content servers. Thus, one example of an ad consumer 130 is a general content server 230 that receives requests for documents (e.g., articles, discussion threads, music, video, graphics, search results, Web page listings, etc.), and retrieves the requested document in response to, or otherwise services, the request. The content server may submit a request for ads to the ad server 120/210. Such an ad request may include a number of ads desired. The ad request may also include document request information. This information may include the document itself (e.g., page), a category or topic corresponding to the content of the document or the document request (e.g., arts, business, computers, arts-movies, arts-music, etc.), part or all of the document request, content age, content type (e.g., text, graphics, video, audio, mixed media, etc.), geo-location information, document information, etc.

The content server 230 may combine the requested document with one or more of the advertisements provided by the ad server 120/210. This combined information including the document content and advertisement(s) is then forwarded towards the end user device 250 that requested the document, for presentation to the user. Finally, the content server 230 may transmit information about the ads and how, when, and/or where the ads are to be rendered (e.g., position, click-through or not, impression time, impression date, size, conversion or not, etc.) back to the ad server 120/210. Alternatively, or in addition, such information may be provided back to the ad server 120/210 by some other means.

Another example of an ad consumer 130 is the search engine 220. A search engine 220 may receive queries for search results. In response, the search engine may retrieve relevant search results (e.g., from an index of Web pages). An exemplary search engine is described in the article S. Brin and L. Page, "The Anatomy of a Large-Scale Hypertextual Search Engine," Seventh International World Wide Web Conference, Brisbane, Australia and in U.S. Patent No. 6,285,999 (both incorporated herein by reference). Such search results may include, for example, lists of Web page titles, snippets of text extracted from those Web pages, and hypertext links to those Web pages, and may be grouped into a predetermined number of (e.g., ten) search results.

The search engine 220 may submit a request for ads to the ad server 120/210. The request may include a number of ads desired. This number may depend on the search results, the amount of screen or page space occupied by the search results, the size and shape of the ads, etc. In one embodiment, the number of desired ads will be from one to ten, and preferably from three to five. The request for ads may also include the query (as entered or parsed), information based on the query (such as geolocation information, whether the query came from an affiliate and an identifier of such an affiliate), and/or information associated with, or based on, the search results. Such information may include, for example, identifiers related to the search results (e.g., document identifiers or "docIDs"), scores related to the search results (e.g., information retrieval ("IR") scores such as dot products of feature vectors corresponding to a query and a document, Page Rank scores, and/or combinations of IR scores and Page Rank scores), snippets of text extracted from identified documents (e.g., Web pages), full text of identified documents, topics of identified documents, feature vectors of identified documents, etc.

The search engine 220 may combine the search results with one or more of the search-based advertisements provided by the ad server 120/210. This combined information including the search results and advertisement(s) is then forwarded towards the user that submitted the search, for presentation to the user. Preferably, the search results are maintained as distinct from the ads, so as not to confuse the user between paid advertisements and presumably neutral search results.

Finally, the search engine 220 may transmit information about the ad and when, where, and/or how the ad was to be rendered (e.g., position, click-through or not, impression time, impression date, size, conversion or not, etc.) back to the ad server 120/210. Alternatively, or in addition, such information may be provided back to the ad server 120/210 by some other means.

Finally, the e-mail server 240 may be thought of, generally, as a content server in which a document served is simply an e-mail. Further, e-mail applications (such as Microsoft Outlook for example) may be used to send and/or receive e-mail. Therefore, an e-mail server 240 or application may be thought of as an ad consumer 130. Thus, e-mails may be thought of as documents, and targeted ads may be served in association with such documents. For example, one or more ads may be served in, under over, or otherwise in association with an e-mail.

Although the foregoing examples described servers as (i) requesting ads, and (ii) combining them with content, one or both of these operations may be performed by a client device (such as an end user computer for example).

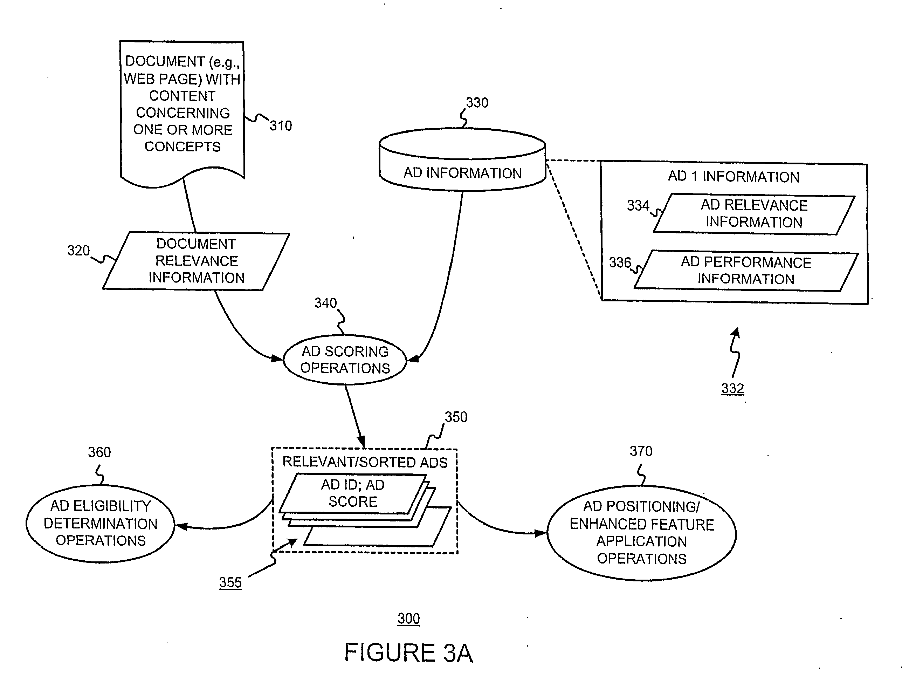

Figure 3A is a bubble diagram of content-targeted ad serving environment 300 in which, or with which, the present invention may be used. Ad scoring operations 340 may use document relevance information 320 of (e.g., derived from) a document 310, as well as ad relevance information 334 for each of one or more ads 332, to determine a plurality of ads (or ad identifiers) and associated ad scores 355. The ads 355 may be limited to those deemed relevant (on a absolute and/or relative basis) and may be sorted 350. Such ad scores 355 can then be used by ad eligibility determination operations 360 and/or ad positioning/enhanced feature application operations 370.

Note that the ad scoring operations 340 may also consider other information in their determination of ad scores, such as ad performance information 336, price information (not shown), advertiser quality information (not shown), etc.

The present invention may, of course, also be used in other environments, such as in a search engine environment disclosed above or that disclosed in U.S. Patent Nos. 6,078,916; 6,014,665 and 6,006,222; each titled "Method for Organizing Information" and issued to Culliss on June 20, 2000, January 11, 2000, and December 21, 1999, respectively, and U.S. Patent Nos. 6,182,068 and 6,539,377 each titled "Personalized Search Methods" and issued to Culliss on January 30, 2001 and March 25, 2003 respectively.

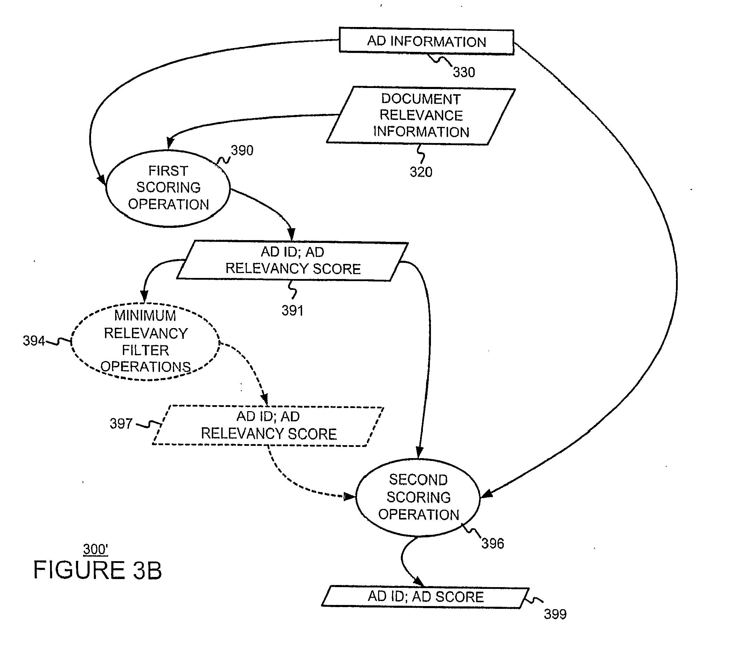

As shown in Figure 3B, the scoring operation may involve multiple stages. For example, a first scoring operation 390 may use document relevance information 320 and ad information 330 to determine a first ad score 391. The first score may be a relevancy score 391. These scores 391 may be filtered by a filtering operation 394 to generate eligible ads 397. A second scoring operation 396 may provide a second (e.g., ranking) score 399 to one or more eligible ads.

The ad relevance information and document relevance information may be in the form of various different representations. For example, the relevance information may be a feature vector (e.g., a term vector), a number of concepts (or topics, or classes, etc.), a concept vector, a cluster (See, e.g., U.S. Provisional Application Serial No. 60/416,144 (incorporated herein by reference), titled "Methods and Apparatus for Probabilistic Hierarchical Inferential Learner" and filed on October 3, 2002, which describes exemplary ways to determine one or more concepts or topics (referred to as "PHIL clusters") of information), etc. Exemplary techniques for determining content-relevant ads, that may be used by the present invention, are described in U.S. Patent Application Serial No. 10/375,900 introduced above

Various way of extracting and/or generating relevance information are described in U.S. Provisional Application Serial No. 60/413,536 and in U.S. Patent Application Serial No. 10/314,427, both introduced above. Relevance information may be considered as a topic or cluster to which an ad or document belongs. Various similarity techniques, such as those described in the relevant ad server applications, may be used to determine a degree of similarity between an ad and a document. Such similarly techniques may use the extracted and/or generated relevance information. One or more content-relevant ads may then be associated with a document based on the similarity determinations. For example, an ad may be associated with a document if its degree of similarity exceeds some absolute and/or relative threshold.

In one exemplary embodiment of the present invention, a document may be associated with one or more ads by mapping a document identifier (e.g., a URL) to one or more ads. For example, the document information may have been processed to generate relevance information, such as a cluster (e.g., a PHIL cluster), a topic, etc. The matching clusters may then be used as query terms in a large OR query to an index that maps topics (e.g., a PHIL cluster identifiers) to a set of matching ad groups. The results of this query may then be used as first cut set of candidate targeting criteria. The candidate ad groups may then be sent to the relevance information extraction and/or generation operations (e.g., a PHIL server) again to determine an actual information retrieval (IR) score for each ad group summarizing how well the criteria information plus the ad text itself matches the document relevance information. Estimated or known performance parameters (e.g., click-through rates, conversion rates, etc.) for the ad group may be considered in helping to determine the best scoring ad group.

Once a set of best ad groups have been selected, a final set of one or more ads may be selected using a list of criteria from the best ad group(s). The content-relevant ad server can use this list to request that an ad be sent back if K of the M criteria sent match a single ad group. If so, the ad is provided to the requestor.

Performance information (e.g., a history of selections or conversions per URL or per domain) may be fed back in the system, so that clusters or Web pages that tend to get better performance for particular kinds of ads (e.g., ads belonging to a particular cluster or topic) may be determined. This can be used to re-rank content-relevant ads such that the ads served are determined using some function of both content-relevance and performance. A number of performance optimizations may be used. For example, the mapping from URL to the set of ad groups that are relevant may be cached to avoid re-computation for frequently viewed pages. Naturally, the present invention may be used with other content-relevant ad serving techniques.

### § 4.1.2 DEFINITIONS

Online ads, such as those used in the exemplary systems described above with reference to Figures 1 and 2, or any other system, may have various intrinsic features. Such features may be specified by an application and/or an advertiser. These features are referred to as "ad features" below. For example, in the case of a text ad, ad features may include a title line, ad text, and an embedded link. In the case of an image ad, ad features may include images, executable code, and an embedded link. Depending on the type of online ad, ad features may include one or more of the following: text, a link, an audio file, a video file, an image file, executable code, embedded information, etc.

When an online ad is served, one or more parameters may be used to describe how, when, and/or where the ad was served. These parameters are referred to as "serving parameters" below. Serving parameters may include, for example, one or more of the following: features of (including information on) a page on which the ad was served, a search query or search results associated with the serving of the ad, a user characteristic (e.g., their geographic location, the language used by the user, the type of browser used, previous page views, previous behavior), a host or affiliate site (e.g., America Online, Google, Yahoo) that initiated the request, an absolute position of the ad on the page on which it was served, a position (spatial or temporal) of the ad relative to other ads served, an absolute size of the ad, a size of the ad relative to other ads, a color of the ad, a number of other ads served, types of other ads served, time of day served, time of week served, time of year served, etc. Naturally, there are other serving parameters that may be used in the context or the invention.

Although serving parameters may be extrinsic to ad features, they may be associated with an ad as serving conditions or constraints. When used as serving conditions or constraints, such serving parameters are referred to simply as "serving constraints" (or "targeting criteria"). For example, in some systems, an advertiser may be able to target the serving of its ad by specifying that it is only to be served on weekdays, no lower than a certain position, only to users in a certain location, etc. As another example, in some systems, an advertiser may specify that its ad is to be served only if a page or search query includes certain keywords or phrases. As yet another example, in some systems, an advertiser may specify that its ad is to be served only if a document being served includes certain topics or concepts, or falls under a particular cluster or clusters, or some other classification or classifications.

"Ad information" may include any combination of ad features, ad serving constraints, information derivable from ad features or ad serving constraints (referred to as "ad derived information"), and/or information related to the ad (referred to as "ad related information"), as well as an extension of such information (e.g., information derived from ad related information).

A "document" is to be broadly interpreted to include any machine-readable and machine-storable work product. A document may be a file, a combination of files, one or more files with embedded links to other files, etc. The files may be of any type, such as text, audio, image, video, etc. Parts of a document to be rendered to an end user can be thought of as "content" of the document. A document may include "structured data" containing both content (words, pictures, etc.) and some indication of the meaning of that content (for example, e-mail fields and associated data, HTML tags and associated data, etc.) Ad spots in the document may be defined by embedded information or instructions. In the context of the Internet, a common document is a Web page. Web pages often include content and may include embedded information (such as meta information, hyperlinks, etc.) and/or embedded instructions (such as Javascript, etc.). In many cases, a document has a unique, addressable, storage location and can therefore be uniquely identified by this addressable location. A universal resource locator (URL) is a unique address used to access information on the Internet.

"Document information" may include any information included in the document, information derivable from information included in the document (referred to as "document derived information"), and/or information related to the document (referred to as "document related information"), as well as an extensions of such information (e.g., information derived from related information). An example of document derived information is a classification based on textual content of a document. Examples of document related information include document information from other documents with links to the instant document, as well as document information from other documents to which the instant document links.

Content from a document may be rendered on a "content rendering application or device". Examples of content rendering applications include an Internet browser (e.g., Explorer or Netscape), a media player (e.g., an MP3 player, a Realnetworks streaming audio file player, etc.), a viewer (e.g., an Abobe Acrobat pdf reader), etc.

A "content owner" is a person or entity that has some property right in the content of a document. A content owner may be an author of the content. In addition, or alternatively, a content owner may have rights to reproduce the content, rights to prepare derivative works of the content, rights to display or perform the content publicly, and/or other proscribed rights in the content. Although a content server might be a content owner in the content of the documents it serves, this is not necessary.

"User information" may include user behavior information and/or user profile information.

"E-mail information" may include any information included in an e-mail (also referred to as "internal e-mail information"), information derivable from information included in the e-mail and/or information related to the e-mail, as well as extensions of such information (e.g., information derived from related information). An example of information derived from e-mail information is information extracted or otherwise derived from search results returned in

response to a search query composed of terms extracted from an e-mail subject line. Examples of information related to e-mail information include e-mail information about one or more other e-mails sent by the same sender of a given e-mail, or user information about an e-mail recipient. Information derived from or related to e-mail information may be referred to as "external e-mail information."

Various exemplary embodiments of the present invention are now described in § 4.2.

### § 4.2 EXEMPLARY EMBODIMENTS

Recall from Figures 3A and 3B that the ad scoring operations may use ad performance information. The present inventors recognized that such performance information (e.g., click-through rate for the ad) is often tracked and maintained globally, across all documents and all concepts. However, using such global performance information may not provide the best results in certain cases. The present invention may be used to track, aggregate and use performance information on a document (e.g., a Web page), host (e.g., Website), and/or concept level to improve the serving of content-targeted ads.

The present invention may include one or more of (1) a user behavior (e.g., click) data gathering stage, (2) a user behavior data preprocessing stage, and (3) a user behavior data based ad score determination or adjustment stage. Exemplary embodiments, for performing each of these stages are described below. Specifically, exemplary methods and data structures for gathering user behavior data and preprocessing such user behavior data are described in § 4.2.2. Then, exemplary methods for determining or adjusting ad scores using such user behavior data are described in § 4.2.3. The present invention is not limited to the particular embodiments described. First, however, the application of various aspects of the present invention to a content-targeted ad serving environment such as that 300 and 300' of Figures 3A and 3B is described in § 4.2.1.

### § 4.2.1 USE OF THE PRESENT INVENTION IN A CONTENT-TARGETED AD SERVING ENVIRONMENT

As can be appreciated from the following example, document specific (and/or host specific) click feedback (or some other tracked user behavior) may be used to improve a content-targeting ad serving system, such as those described in the provisional and utility patent applications listed and incorporated by reference above. Consider a typical Website like www.wunderground.com that hosts weather pages about different cities. Consider three (3) Web pages about weather in Lake Tahoe, Las Vegas and Hurley, Wisconsin.

First, click feedback may be useful to improve the quality of ads. For example, a content-targeted ad system may serve ads by generating a query based on concatenating, using a Boolean "OR" operation, several concepts from a Web page. Thus, the query = "Lake Tahoe OR barometer OR Squaw Valley" may be generated using these determined concepts from a Web page about the weather in Lake Tahoe. These are different concepts, and may lead to ads about barometers, Lake Tahoe hotels, and Squaw Valley ski rentals. In such cases, it may be difficult to choose the "right" ads (or set of ads) to serve. Again, the "right" ads (or set of ads) are likely different on a per Web page basis. For a Las Vegas related Web page, the most reasonable ad(s) may be for hotels there. For a Hurley, WI related Web page, it is likely those checking weather there are not necessarily visiting there and need hotels, but may be more interested in weather-related instruments. For a Lake Tahoe related Web page, users are more likely to select ads for lift tickets and ski rentals. As this example shows, three similarly structured Web pages may have different "click responses" for unrelated topics or concepts. Ad performance parameters (e.g., click through rates (CTRs) are useful and may be maintained on a per-URL basis. The present invention may use such information to choose "better" and more interesting ads depending on the Web page and using information about what others have clicked on.

Click feedback may also be useful for purposes of "correct" auctioning of ad spots/enhanced ad features. For example, ad systems may use search query information (e.g., keyword) CTR (referred to simply as "search CTR") for auctioning ad spots on a search results Web page. But this is not particularly relevant to content CTR. For example, search CTR for the keyword "barometer" may be high if that's what users are searching for. However, for in the context of a content-targeting ad system, ads with a barometer concept targeting are unlikely to generate any clicks if served with a weather page on Las Vegas. Ads with a hotel concept targeting and/or real estate concept targeting are more likely to generate clicks if served with such a Las Vegas weather page. Thus, search CTR information which may be useful when auctioning ad spots on a search results page may not be useful (e.g., for determining an estimated cost per thousand impressions (ECPMs) and the cost per click (CPCs)) in the context of auctioning ad spots on a content Web page. The present invention may be used to determine a better CTR for each ad (or ad group), using per-URL CTR statistics.

Click feedback may also be useful for purposes of extrapolating performance information from transient ads (or ad groups). Advertisers, ads, and/or ad groups may be considered to be transient in that they may reduce their budgets, may opt-out or end their campaigns, etc. However, click feedback information for ads served with a Web page for Bally's Hotel in Las Vegas or MGM Grand, may be applied to (perhaps with a lower weight) other ads that share similar characteristics (e.g., that have similar concepts or concept targeting) when considering whether or not to serve such ads with the Web page. The present invention may be used to extrapolate click feedback information from prior clicked ads, to new ads and show "related" ads (that trigger the same concepts) to compensate for reduced ads inventory.

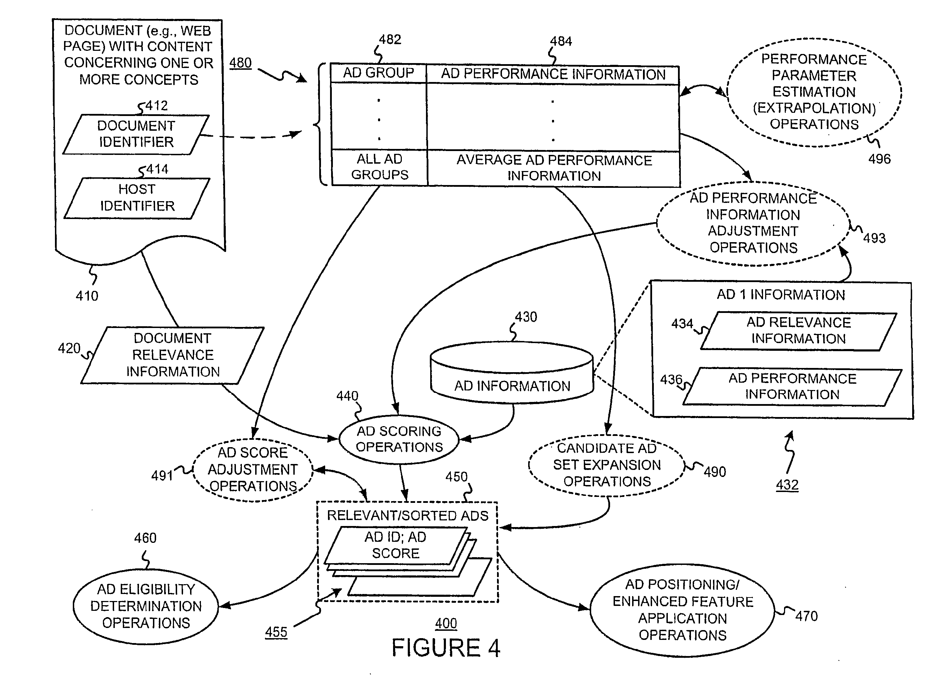

Figure 4 is a bubble diagram of a first embodiment 400 of the present invention in an environment such as that of Figure 3A. As was the case with the environment 300 of Figure 3A, ad scoring operations 440 may use document relevance information 420 of a document 410, as well as ad relevance information 434 for each of one or more ads 432, to determine a plurality of ads (or ad identifiers) and associated ad scores 455. The ads 455 may be limited to those deemed relevant (on a absolute and/or relative basis) and may be sorted 450. Such ad scores 455 can then be used by ad eligibility determination operations 460 and/or ad positioning/enhanced feature application operations 470. Various operations, shown in phantom, may use performance data 480 of ads for the particular document. Operations for collecting and/or aggregating ad performance data on a per-document, per-host, and/or per-concept basis are not shown. In any event, as indicated by table 480, ad performance information 484 (e.g., click through rate, conversion rate, etc.) as well as underlying parts of such performance information (e.g., impression counts, selection counts, conversion counts, etc.) (not shown) may be tracked for each of a number of ads (or ad groups) 482 on a per document basis. For example, as illustrated in Figure 4, a document 410 may be associated with a table 480 (e.g., using a document identifier 412). Average ad (or average ad group) performance 484 for all ads (or ad groups) 482 for a given document may also be determined and stored.

The present invention may perform one or more of the operations depicted in phantom. These operations may use the document-specific ad (or ad group) performance information 480. Candidate ad set expansion operations 490 may be used to increase the number of "relevant" or "eligible" ads using, at least, the document-specific ad (or ad group) performance information 480. Ad score adjustment operations 491 may be used to adjust already determined scores of ads 455 using, at least, the document-specific ad (or ad group) performance information 480. Ad performance information adjustment operations 493 may be used to adjust (temporarily) ad performance information 436 (or may be used instead of, or in combination with, ad performance infuriation 436) using, at least, the document-specific ad or (ad group) performance information 480. Finally, performance parameter estimation (extrapolation) operations 496 may be used to populate, and/or adjust and supplement ad (or ad group) performance information 484. Exemplary methods for performing these operations are described later.

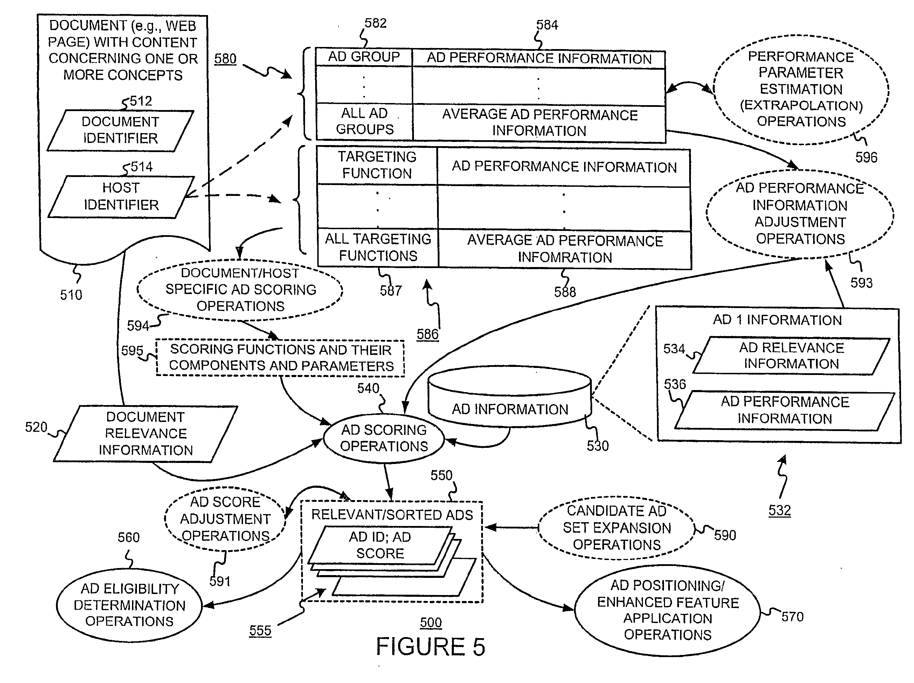

Figure 5 is a bubble diagram of a second embodiment 500 of the present invention in an environment such as that of Figure 3A. As was the case with the environment 300 of Figure 3, ad scoring operations 540 may use document relevance information 520 of a document 510, as well as ad relevance information 534 for each of one or more ads 532, to determine a plurality of ads (or ad identifiers) and associated ad scores 555. The ads 555 may be limited to those deemed relevant (on a absolute and/or relative basis) and may be sorted 550. Such ad scores 555 can then be used by ad eligibility determination operations 560 and/or ad positioning/enhanced feature application operations 570. Various operations, shown in phantom, may use performance data 584 of ads (or ad groups) 582 and/or performance data 588 of targeting functions 587 for the particular document or host (e.g., Website).

Operations for collecting and/or aggregating ad performance data on a per-document, per-host, and/or per-concept basis are not shown. In any event, as indicated by table 580, ad (or ad group) performance information 584 (e.g., click through rate, conversion rate, etc.) as well as underlying parts of such performance information (e.g., impression counts, selection counts, etc.) (not shown), may be tracked for each of a number of ads (or ad groups) 582 on a per host basis. Similarly, as indicated by table 586, ad (or ad group) performance information 588, as well as underlying parts of such performance information. (not shown) may be tracked for each of a number of targeting functions 587 on a per-host basis. For example, as illustrated in Figure 5, a host 514 of a document 510 may be associated with tables 580 and 586. Average ad (or ad group) performance 584, 588 for all ads (or ad groups) 582, 587 for a given host may also be determined and stored.

The present invention may perform one or more of the operations depicted in phantom. These operations may use the host-specific ad performance information 580 and/or host specific targeting function ad performance information 586. (To simplify the drawing, the use of this information 580 and 586 by some of the operations is not indicated.) Candidate ad set expansion operations 590 may be used to increase the number of "relevant" or "eligible" ads using, at least, the host-specific ad (or ad group) performance information 480. Ad score adjustment operations 591 may be used to adjust already determined scores of ads 555 using, at least, the host-specific ad (or ad group) performance information 580. Ad performance information adjustment operations 593 may be used to adjust (temporarily) ad performance information 536 (or may be used instead of, or in combination with, ad performance information 436) using, at least, the host-specific ad (or ad group) performance information 580. Document/host specific ad scoring operations 594 may be used to choose an appropriate scoring function and/or adjust scoring function components and/or parameters 595 used by the ad scoring operations 540. For example, different scoring functions could use different ad targeting techniques (e.g. keyword-based, concept-based, document concept-based, host concept-based, etc.) or a combination of different ad targeting techniques with various weightings. Finally, performance parameter estimation (extrapolation) operations 596 may be used to populate, and/or adjust and supplement ad (or ad group) performance information 584. Exemplary methods for performing these operations are described later.

As can be appreciated from the foregoing, various operations, consistent with the present invention, may be used to consider document specific performance information (e.g., ad, ad group, targeting function, etc.) applied before, during; or after ad scoring.

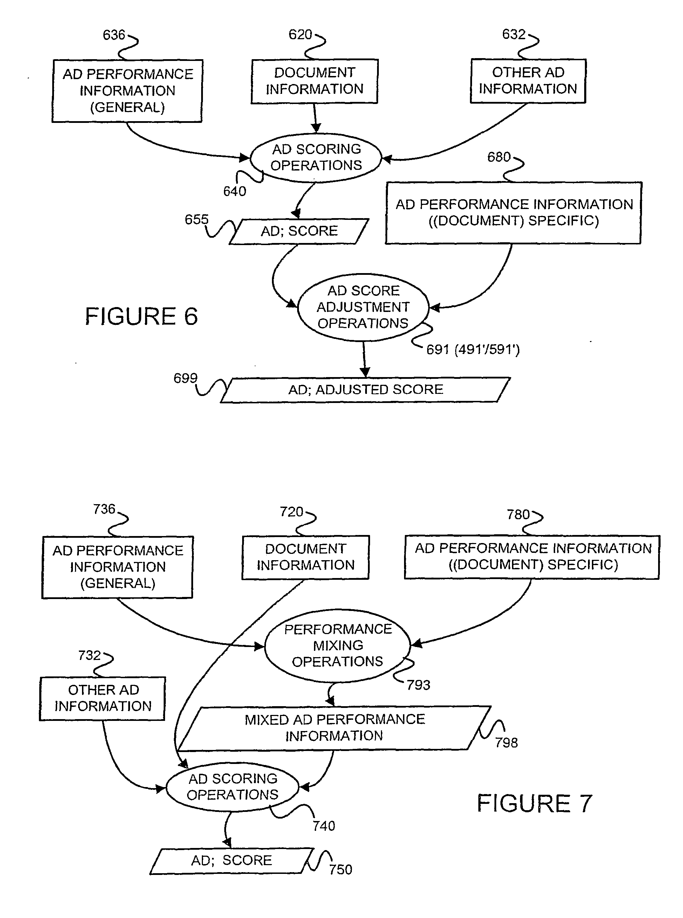

For example, Figure 6 illustrates ad score adjustment operations 691 (Recall, e.g., 491 and 591 of Figures 4 and 5, respectively.) that use document specific ad performance information 680 to generate an adjusted score 699 from an initial score 655. The initial score 655 may have previously been generated by ad scoring operations 640 using (general) ad performance information 636, document information 620 and other ad information (e.g., targeting information, price information, advertiser quality information, etc.) 632. Thus, Figure 6 illustrates the use of document specific ad performance information after ad scoring.

Figure 7 illustrates ad performance mixing (adjustment) operations 793 (Recall, e.g., 493 and 593 of Figures 4 and 5, respectively.) that use document specific ad performance information 780 to adjust (general) ad performance information 736 to generate mixed (or adjusted) ad performance information 798. Ad scoring operations 740 can the use such mixed ad performance information 798, as well as other ad information 732 and document information 720, to generate an ad score 750. Thus, Figure 7 illustrates the use of document specific ad performance information before ad scoring.

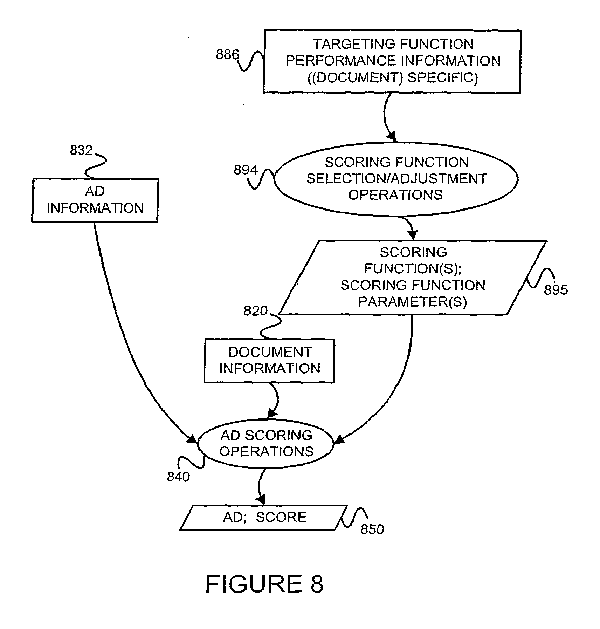

Figure 8 illustrates the use of document specific (or host specific) targeting function performance information by scoring selection/adjustment operations 894 to select a scoring function and/or to adjust parameters of a scoring function 895. Ad scoring operations 840 then use the selected scoring function, and/or the scoring function parameters, as well as ad information 832 and document information 820, to generate an ad score 850. Thus, Figure 8 illustrates the use of (e.g., document, host, etc.) specific targeting function performance information during the ad scoring.

Although the foregoing operations were described with reference to document specific performance information, the performance information can be specific to some grouping of documents (e.g., host specific, document cluster specific, etc.). In addition, although the foregoing operations were described with reference to ad performance information, performance information of some grouping of ads (e.g., ad groups, etc.) may be used.

## § 4.2.2 STORING AND AGGREGATING USER BEHAVIOR DATA

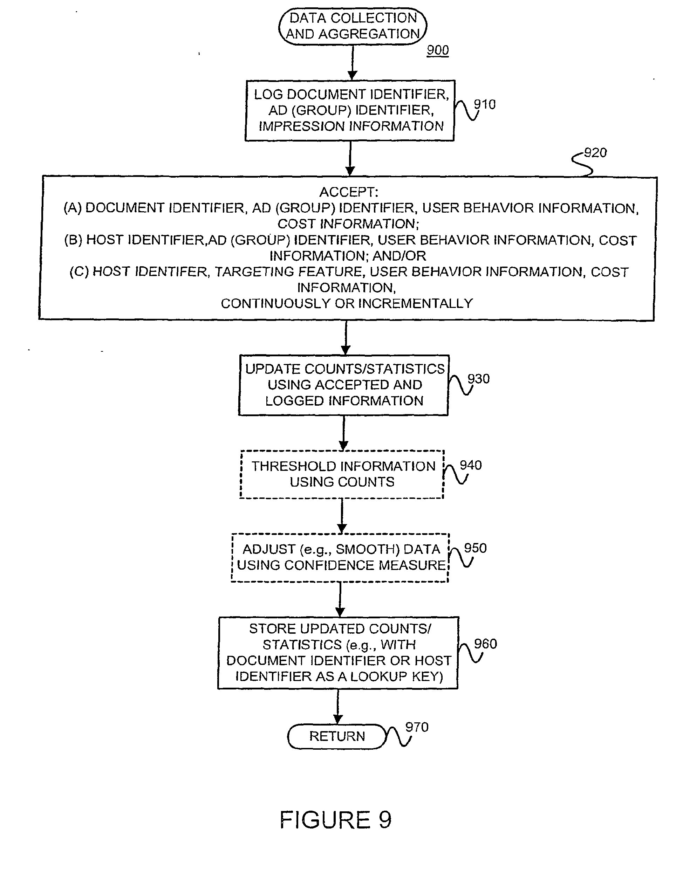

Figure 9 is a flow diagram of an exemplary method 900 for collecting and aggregating data in a manner consistent with the present invention. Each time an ad is served in association with a document, the document (and/or host) identifier (e.g., a URL) may be logged, an ad (and/or an ad group) identifier may be logged, and impression information may be logged. (Block 910) Various user behavior information may be accepted. (Block 920) For example, a document identifier, an ad (or ad group) identifier, user behavior information and cost information (e.g., cost per selection, cost per conversion) may be accepted. Alternatively, or in addition, a host identifier, an ad (or ad group) identifier, user behavior information and cost information may be accepted. Alternatively, or in addition, a host identifier, a targeting function (or targeting functions), user behavior information , and cost information may be accepted. Such user behavior information may be accepted continuously (e.g., as it occurs), or incrementally (e.g., in batches). Counts and/or statistics may then be updated based on the accepted and logged information. (Block 930) The information may be thresholded using counts. (Block 940) Data may be adjusted (e.g., smoothed) using some measure of data confidence. (Block 950) The updated counts and/or statistics may then be stored. (Block 960) A document identifier (e.g., a URL) or a host identifier (e.g., a home page URL) may be used as a lookup key to the stored counts and/or statistics. (Block 960)

Referring back to block 910, the present invention may use an offline process to aggregate logs of user behavior (e.g., using a front end Web server, such as Google Web Server), and record statistics on a per-URL, per-domain information basis. For example, all clicks, and a sample of ad impressions can be collected (e.g., twice a day). This data may be referred to below as "Daily-Decoded Log Data."

Referring back to blocks 920 and 930, from the above data, and an AdGroupCreativeId-to-AdGroup mapping, summary data structures may be generated. The following data structures are useful for a content ads system that works off an AdGroup granularity, which is why that is being used as the unit of aggregation. Other units of aggregation (e.g., AdGroupCreativeId, or similar units) are possible, and the following data structures can be modified accordingly. In the following, "numimprs" means number of impressions, "numclicks" means number of user selections (e.g., clicks), "avgcpc" means average cost per selection (e.g., click), and "avgctr" means average selection (e.g., click-through) rate.

**(1) URL:-> {AdGroup, numimprs, numclicks, avgcpc} + avgctr**
**(2) Host:-> {AdGroup, numimprs, numelicks, avgcpc} + avgctr**
**(3) Host:-> {targeting-feature, nunimprs, numclicks, avgcpc} + avgctr**
**(4) AdGroup:-> {numimprs, numclicks, avgcpc} + avgctr**

To generate the foregoing data structures, the present invention may aggregate over the last K days (e.g., 2 months) of Daily-Decoded-LogData, and maintain information for all keys where numimprs > threshold_num_imprs or numclicks > threshold_num_clicks. Average performance information may also be generated and stored. For example, average user behavior over all (a) ad groups per document; (b) ad groups per host and (c) targeting functions per host, may be determined.

Referring back to block 940, this aggregation is an example of a "counting + thresholding" problem, where there is a long tail of entries. That is, typically the counters for all URLs/AdGroups may be maintained, and counters that don't reach the threshold at a time of aggregation may be discarded. Since this may be considered to be a classic "iceberg" query, and the present invention may use known techniques (See, e.g., the paper M. Fang, N. Shivakumar, H. Garcia-Molina, R. Motwani, J. Ullman, "Computing Iceberg Queries Efficiently," 24th International Conference on Very Large Databases, (August 24-27, 1998) (incorporated herein by reference).) to perform thresholding early.

Referring back to block 950, a refined embodiment of the present invention may employ data smoothing. The "confidence" of click statistics may vary a lot for different ads and URLs. For example, ad X may have gotten 200 clicks out of 1000 impressions, while ad Y may have gotten 1 click out of 5 impressions. Although both ads have the same CTR, the confidence level of the statistics for ad X is higher than those for ad Y. To reflect such a confidence parameter, the present invention may "smooth" the CTR values towards the mean content-ads CTR as follows:

$$SmoothedCTR = (Clicks + 1) / (Impressions + 1 / BaseCTR)$$

There can also be different ways to smooth the CTR values. One alternative is to use the following:

$$SmoothedCTR = CTR * confidence + BaseCTR * (1 - confidence)$$

where confidence is set based on the number of impressions. Confidence may also be a function of other characteristics of the data, such as age of the data sample.

There are many different ways to collect and store the click statistics in a manner consistent with the present invention, in addition to the options for maintaining the click statistics data structures mentioned above. Statistics may be collected for the entire time period. Alternatively, statistics may be collected and loaded in an incremental manner. The statistics may be stored in files and loaded into memory at runtime. Alternatively, or in addition, they can be stored in a database and retrieved at run time. Although an offline mechanism for compute feedback periodically was described, such feedback computation could be made online, in realtime too.

Having described exemplary techniques for logging and aggregating user behavior data to generate data structures such as those 480, 580, 586 of Figures 4 and 5, various methods that may use one or more of these data structures in a manner consistent with the present invention are now described in § 4.2.3 below.

### § 4.2.3 DETERMINING AND/OR ADJUSTING AD SCORES USING STORED USER BEHAVIOR DATA

### § 4.2.3.1 CANDIDATE AD SET EXPANSION

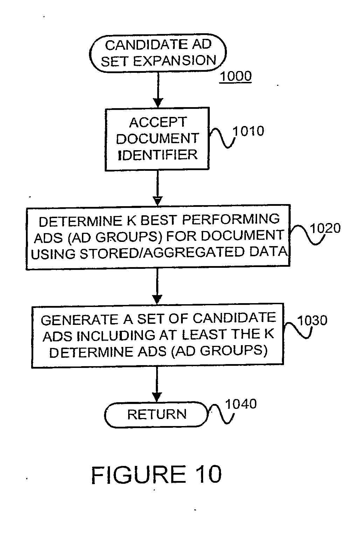

Figure 10 is a flow diagram of an exemplary method 1000 for expanding a set of candidate ads (Recall, e.g., operations 490 and 590.) in a manner consistent with the present invention. A document identifier (e.g., a URL) is accepted. (Block 1010) A first predetermined number (e.g., K, wherein K may range from 0 to 500 in one embodiment) of the best performing ads (or ad groups) are determined for the document using the stored/aggregated user behavior data. (Block 1020) Finally, a set of candidate ads, including at least the first predetermined number of best performing ads (or ad groups) is determined. (Block 1030) The set of candidate ads may include ads that would be determined under normal processing. Although not shown, whether or not to expand the original set of ads, and/or the number K of ads to expand it by, may depend on the absolute and/or relative performance of the ads of the original set.

As can be appreciated from the foregoing, this aspect of the present invention permits ads that don't necessarily perform particular well globally (e.g., over all documents) but do perform well for a given document (or for a given host) to be eligible to be served in association with the given document.

In one exemplary embodiment of the present invention, for each URL, those AdGroups with the top K highest CTRs are appended to the AdGroup candidates obtained from normal scoring mechanisms. This may be done using the data structure: *URL:-> {AdGroup, numimprs, numclicks, avgcpc} + avgctr.*

### § 4.2.3.2 AD SCORE ADJUSTMENT TECHNIQUES

### § 4.2.3.2.1 AD SCORE ADJUSTMENT

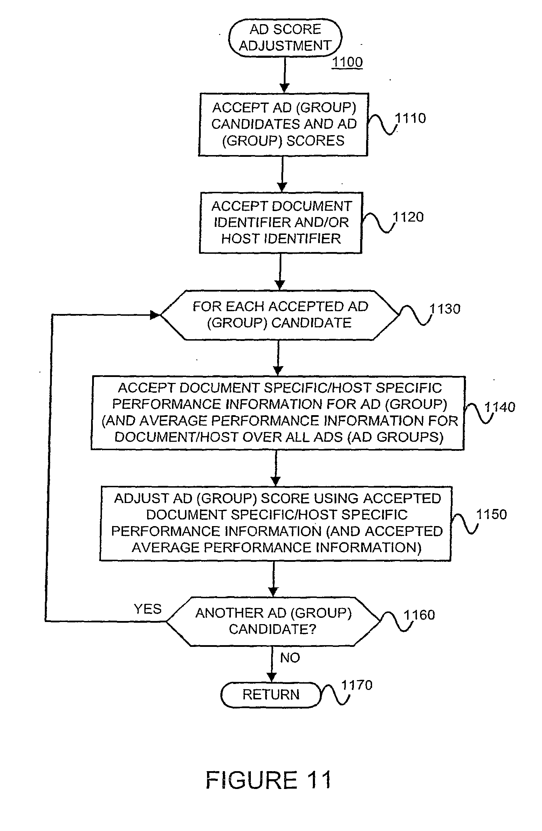

Figure 11 is a flow diagram of an exemplary method 1100 for adjusting an ad score (Recall, e.g., operations 491 and 591) in a manner consistent with the present invention. Ad (or ad group) candidates and their respective scores (Recall, e.g., 455 and 555) are accepted. (Block 1110) A document identifier (e.g., URL) and/or host identifier (Website home page URL) may be accepted. (Block 1120). As indicated by loop 1130-1160, a number of acts are performed for each accepted ad (or ad group) candidate. More specifically, document specific and/or host specific ad (or ad group) performance information is accepted. (Block 1140) Average performance information for the document and/or host over all ads (or ad groups) may also be accepted. Then, the ad (or ad group) score is adjusted using the accepted document specific and/or host specific performance information (and using the average performance information). (Block 1160) When all ad (ad group) candidates have been processed, the method 1100 is left. (Node 1170)

As can be appreciated from the foregoing, a score of an ad, which may be a function of at least the ad's performance without regard to the document with which it was served, may be adjusted using document specific and/or host specific performance information for the ad.

In one exemplary embodiment of the present invention, AdGroup candidates and concepts (e.g., PHIL clusters) are re-scored using their CTR on the given Web page or host. This may be done using the data structure URL:-> *{AdGroup, numimprs, numclicks, avgcpc} + avgctr.*

The method 1100 of Figure 11 is an example of the post-scoring application of document (and/or host) specific performance information. (Recall, e.g., Figure 6).

### § 4.2.3.2.2 AD PERFORMANCE ADJUSTMENT

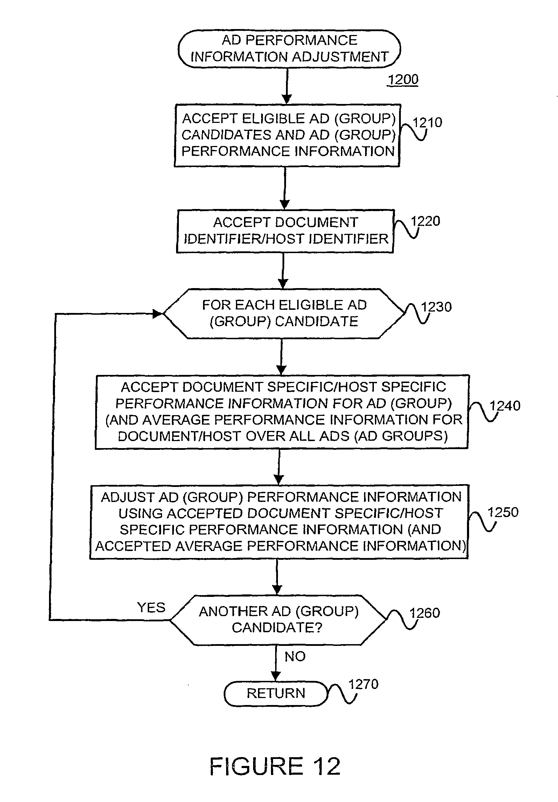

Figure 12 is a flow diagram of an exemplary method 1200 for adjusting (temporarily) ad performance information (Recall, e.g., operations 493 and 593.) in a manner consistent with the present invention. Eligible ad (or ad group) candidates and ad (or ad group) performance information is accepted. (Block 1210) A document identifier (e.g., URL) and/or a host identifier is accepted. (Block 1220) As indicated by loop 1230-1260, a number of acts are performed for each accepted ad (or ad group) candidate. More specifically, document specific and/or host specific ad (or ad group) performance information is accepted. (Block 1240) Average performance information for the document and/or host over all ads (or ad groups) may also be accepted. Then, the ad (or ad group) performance information is adjusted using the accepted document specific and/or host specific performance information (and using the average performance information). (Block 1250) When all ad (ad group) candidates have been processed, the method 1200 is left. (Node 1270)

As can be appreciated from the foregoing, for purposes of determining a score of an ad with respect to a given document, the ad's performance, which normally does not consider the document with which it was served, may be adjusted using document specific and/or host specific performance information for the ad. The method 1200 of Figure 12 is an example of the pre-scoring application of document (and/or host) specific information. (Recall, e.g., Figure 7.)

In one exemplary embodiment of the present invention, Web page, Website, or content-ads specific selection statistics are sent to an ad server so it can use these in determining an ad score (e.g., for use in assigning ad positions/ad features). This may be done using one or more of the following data structures:

> *URL:->* {*AdGroup, numimprs, numclicks, avgcpc*} + *avgctr;*
> *Host:->* {*AdGroup, numimprs, numclicks, avgcpc*} + *avgctr; and*
> (*AdGroup:->* {*numimprs, numclicks,* avgcpc} + *avgctr*).

Consistent with the present invention, the selection statistics may be attached to each AdGroup in an AdGroup list sent to an ad server. The present invention may use URL-level statistics if they exist. Otherwise, the present invention may use the host-level (e.g., Website home page URL level) statistics, the AdGroup statistics across all content-ads properties, or, in a less preferred case, the content-ads mean AdCTR.

### § 4.2.3.2.3 DOCUMENT/HOST SPECIFIC AD SCORING FUNCTION DETERMINATION

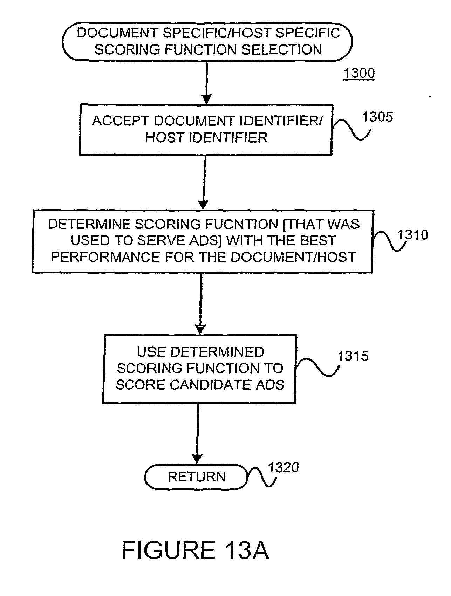

Figure 13A illustrates an exemplary method 1300 for selecting a document (or host) specific scoring function (Recall, e.g., operations 594.) in a manner consistent with the present invention. A document (or host) identifier is accepted. (Block 1305) A scoring function (that had served ads for the document) with the best performance is determined. (Block 1310) (Recall, e.g., information 586 of Figure 5.) The determined scoring function is then used to score one or more ads (Block 1315) before the method 1300 is left (Node 1320).

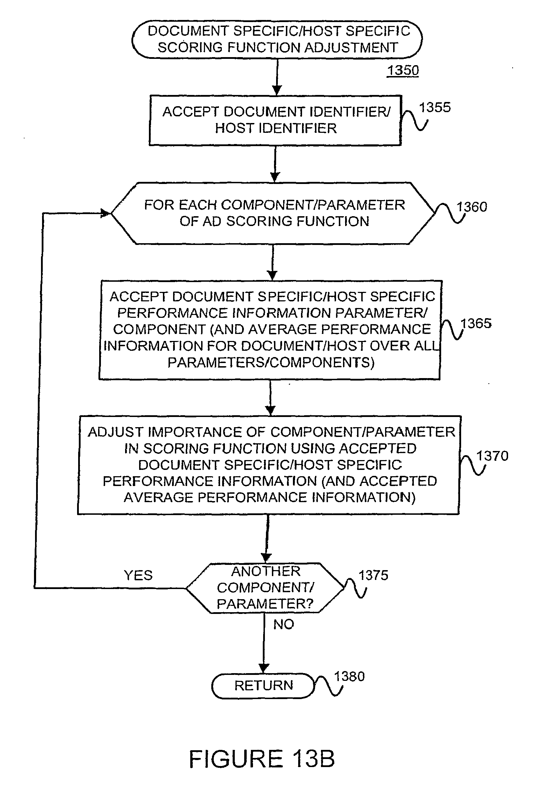

Figure 13B is a flow diagram of an exemplary method 1350 for document specific or host specific scoring of ads (Recall, e.g., operations 594.) in a manner consistent with the present invention. Note that an ad score may be determined using a function. The function may include variables (e.g., concepts, keywords, price information, performance information, a similarity metric, and/or advertiser quality information, etc.) and constants (e.g., numbers used to give weights to the variables, raise the variables to an exponential power, etc.)

A document identifier (e.g., URL) and/or host identifier are accepted 1355. As indicated by loop 1360-1375, a number of acts are performed for each component/parameter of an ad scoring function. More specifically, document specific and/or host specific performance information for the given component/parameter is accepted. (Block 1365) The average performance information for the document and/or host over all parameters/components may also be accepted. The importance of the component/parameter in the scoring is then adjusted using such accepted document specific and/or host specific performance information (as well as the accepted average performance information). (Block 1370) After all of the components/parameters have been processed, the method 1350 is left. (Node 1380)

An exemplary application of this feature of the present invention is now provided. Assume that ads can be targeted using, among other things, both location and time-of-day. Assume further that ads targeted using location have performed better than ads targeted using time-of-day when served with a particular Web page. In this case, when determining ads to serve with the particular Web page, a location component of a targeting function can be weighted more than a time-of-day component of a targeting function.

Note that various aspects of the methods 1300 and 1350 of Figures 13A and 13B, respectively, may be used in combination.

As can be appreciated from the foregoing, this aspect of the present invention permits document (and/or host) specific performance related to a scoring function and/or a component thereof, (which may be more general than document and/or host specific performance related to a given ad) to be used. Thus, for example, for a Web page concerning the categories "automobiles" and "Rolls Royce," ads concerning the category "luxury real estate" may have had better performance than ads concerning the "automobiles". Thus, when that document is to be served, weights corresponding to the categories "automobiles" and "luxury real estate" may be adjusted accordingly. As another example, ads served using host relevance (e.g., concept) targeting may have performed better than those served using document relevance (e.g., concept) targeting, which may have performed better than those targeted solely on performance and price information. This may affect which scoring function is used, or how scores from different scoring functions are weighted in determining a final score.

In an exemplary embodiment of the present invention, out of a possible space of and targeting functions, particular targeting functions may be chosen to use for a URL (e.g., default-content, parent-url, url-keywords) given click statistics for that host and targeting function. This may be done using the data structure: Host:-> *{targeting-function, numimprs, numclicks, avgcpc} + avgct.*

The methods of Figures 13A and 13B are examples of applying document (and/or host) specific information during scoring. (Recall, e.g., Figure 8.)

## § 4.2.3.3 CONCEPT-BASED AD PERFORMANCE ESTIMATION/EXTRAPOLATION

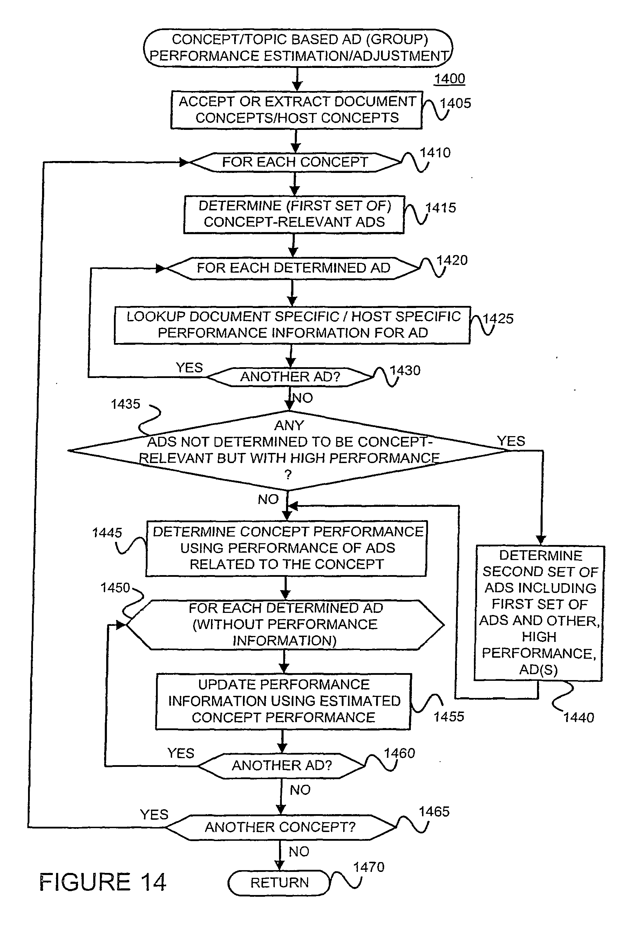

Figure 14 is a flow diagram of an exemplary method 1400 for estimating and/or adjusting ad performance information in a manner consistent with the present invention. Document concepts (and/or host concepts) are accepted or extracted. (Block 1405) As indicated by loop 1410-1465, a number of acts are performed for each of the concepts accepted or extracted. More specifically, a first set of concept-relevant ads is determined. (Block 1415) Then, as indicated by loop 1420-1430, for each of the concept-relevant ads determined, document specific (and/or host specific) performance information is looked up. (Block 1425) Then, it is determined whether or not there are any ads not determined to be concept-relevant, but that have a high document specific (and/or host specific) performance nonetheless. (Decision block 1435) High performance may be determined using relative or absolute performance. If so, a second set of ads, including the first set of ads and the other, high performance, ad(s) is determined (Block 1440) before the method 1400 continues to block 1445. If there are no ads that were not concept-relevant but that have a high document specific (and/or host specific) performance nonetheless, the method 1400 continues directly to block 1445. Concept performance is determined using the performance of ads related to the concept. (Block 1445) As indicated by loop 1450-1460, for each determined ad that does not have any performance information (or, alternatively or in addition, for each determined ad that has a statistically insignificant amount of performance information, and/or even all ads relevant to the concept) for the specific document (and/or host), the performance information of each such ad is updated using estimated concept performance. (Block 1455) The estimated concept performance may have been determined using the document (and/or host) specific performance of ads falling under the concept. Once all ads and concepts have been processed, the method 1400 is left. (Node 1470)

The performance parameter estimation (extrapolation) operations 496, 596 may be concept-based. These operations are useful because ads (or ad groups) and/or advertisers may be transient, in which case it may be difficult, if not impossible, to gather a statistically significant amount of user behavior data with respect to a given ad (or ad group) for a given document. Since there may be a relatively small number of tracked user behavior (e.g., clicks) compared to the number of documents (as identified by their URLs) and ads, a user behavior (click) statistics matrix may be rather sparse. Some ads have very few clicks and impressions, and most ads have no statistics at all. To effectively use the limited data points, the present invention may use the performance parameter estimation (extrapolation) operations 496, 596 to populate user behavior (e.g., click) statistics of ads for which there is no (or very little) user behavior data for the document (or host). These operations 496,596 may use concepts as a bridge for propagating statistics from ads to ads.

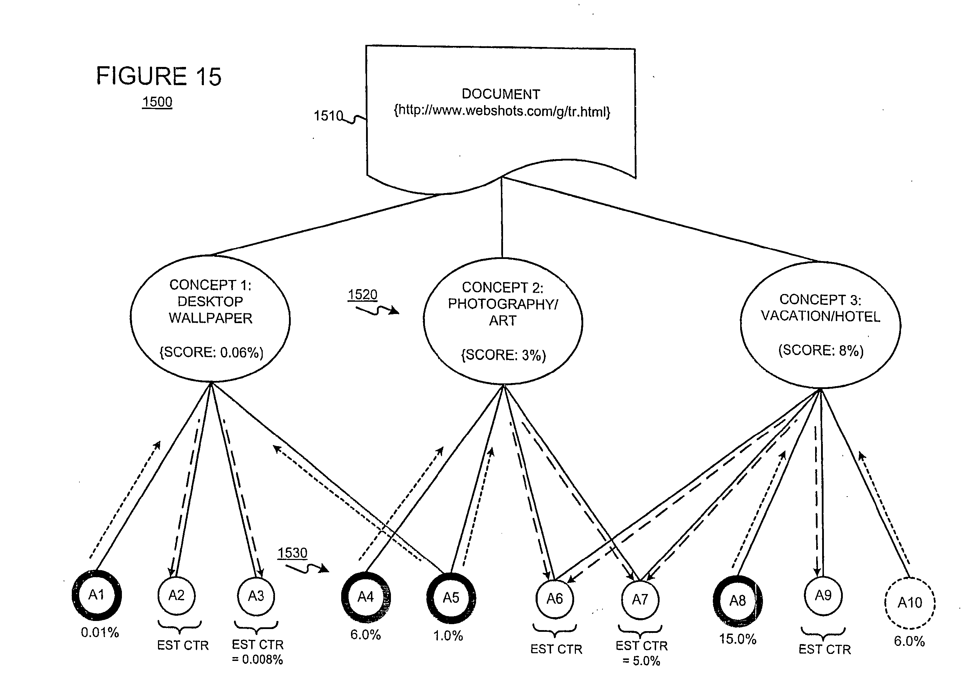

Figure 15 is a diagram illustrating an example of the operation of the method of Figure 15. Consider a document 1510 having the URL http://www.webshots.com/g/tr.html. Suppose that concepts C1, C2, and C3 1520 for the document 1510 have been extracted. A number of content-relevant ads A1, A2, A9 1530 may be generating using these extracted concepts 1520. (Recall, e.g., Block 1415 of Figure 14.) The present invention may use the URL of the document 1510 to look up a document specific click-statistics table. Using this table, the present invention can be used to find click statistics for each of the ads A1, A4, A5 and A8 (each depicted with a heavy line circle), while ads A2, A3, A6, A7 and A9 initially had no click statistics. (Recall, e.g., Block 1425 of Figure 14.)

From the table of click-statistics, it was determined that ad A10 has a high CTR, even though it was not returned in the first round of ads matching. The set of ad (or ad group) candidates may be expanded to include ad A10. (Recall, e.g., Blocks 1435 and 1440 of Figure 14.)

Click statistics of each concept Ci may then be estimated using, at least, the click statistics for the ads relevant to the concept and the ad-concept connectivity. (Recall, e.g., Block 1445 of Figure 14.) As indicated by the short dashed lines in Figure 15, the click statistics of concept C1 may be a function of the click statistics of Ads A1 and A5, the click statistics of concept C2 may be a function of the click statistics of Ads A4 and A5, and the click statistics of concept C3 may be a function of the click statistics of Ads A8 and A10. In one exemplary embodiment of the present invention, the click statistics for each concept Ci may be determined as follows:

$$clicks(Ci) = sum\_Aj \{clicks(Aj) * P(Ci|Aj)\}$$

$$\text{imprs(Ci)} = \text{sum\_Aj} \{\text{imprs(Aj)} * \text{P(Ci|Aj)}\}$$

$$\text{ctr(Ci)} = \text{clicks(Ci)} / \text{imprs(Ci)}$$

where P(Ci|Aj) is the probability of concept Ci given ad Aj. For example, A8 and A10 both have high CTR, and they are well-related to the concept C3 (e.g., according to a PHIL, cluster analysis). Accordingly, concept C3 gets a high estimated CTR.

As indicated by the long dashed lines of Figure 15, the statistics from concepts may then be propagated back down to the rest of the ads (e.g., ads with no click data or statistically insignificant click data) in a similar fashion. Thus, ads related to high CTR concepts may get high estimated CTRs, and ads related to low CTR concepts may get low estimated CTRs. (Recall, e.g., Block 1455 of Figure 14.) Thus, for example, ad A7 was given a relatively high CTR of 5% since the concepts C2 and C3 to which it is related have relatively high estimated CTRs. On the other hand, ad A3 was given a relatively low CTR of 0.008% since the concept C1 to which it is related has a relatively low estimated CTR.

The present invention may perform such click-statistics propagation between ads and their concepts, based on the assumption that if some ads on a given concept achieved high (or low) performance for a given document (or host), then other ads on that concept are also likely to have relatively high (or low) performance and are therefore more likely to be clicked when served with the given document (or host). Various weightings and decaying factors may be applied while doing concept based reinforcement.

In one embodiment of the present invention, the concept and ad scores may be adjusted using their real or estimated CTR. For example, an adjusted score may be determined using the following:

$$\text{new\_score} \sim \text{old\_score} * (\text{CTR} / \text{BaseCTR})$$

Thus, ads/concepts with CTR > BaseCTR may be promoted, while the low CTR ads/concepts may be demoted. This formula used in an ad system may be tuned based on experiment results.

### § 4.2.3.4 COMBINING OPERATIONS

The present invention may use one or more of the above-described operations to improve content-targeted ad serving using document/host specific user behavior feedback (e.g., click statistics). For example, one embodiment of the present invention may:

1. Use document information (e.g., a document identifier) to determine one or more concepts Doc->concept). For example, content of a Web page may be provided to a PHIL, server, which sends back a list of matching clusters and activations. (In one embodiment, ads are not returned if the page is classified as negative or porn.)
2. Concepts may be re-scored. For example, scores of the matching clusters may be adjusted using their estimated CTR computed from click statistics of clicked ads.
3. The concepts may then be used to determine concept-relevant ads Concept->ads). For example, the matching clusters may be used to retrieve a list of matching ad candidates.
4. A predetermined number (K) of ads with top CTRs may be added to an initial set of candidate ads.
5. An intermediate score for the candidate ad groups may then be determined (using PHIL or N-Gram) using a measure of how well ad information (e.g., targeting criteria, landing page content, and/or ad text) matches the document (e.g., Web page) contents.
6. Scores of the ads may then be adjusted using their actual/estimated CTR computed from their clusters' estimated click statistics.
7. Finally, the top scoring ads may be sent to a facility (e.g., an ad-mixer) for combining the ads and the content of the document. For example, ad groups with top scores may be selected and sent to the ad-mixer.

The present invention may filter out candidate ads that are listed as competitor ads. Further, porn ads may be blocked if only family-safe ads are to be shown.

## § 4.2.4 EXEMPLARY APPARATUS

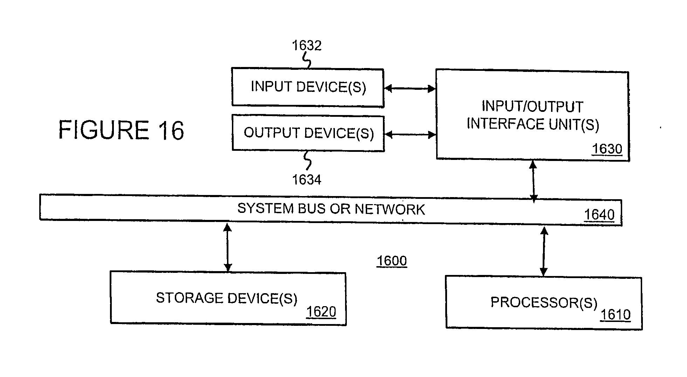

Figure 16 is high-level block diagram of a machine 1600 that may affect one or more of the operations discussed above. The machine 1600 basically includes one or more processors 1610, one or more input/output interface units 1630, one or more storage devices 1620, and one or more system buses and/or networks 1640 for facilitating the communication of information among the coupled elements. One or more input devices 1632 and one or more output devices 1634 may be coupled with the one or more input/output interfaces 1630.

The one or more processors 1610 may execute machine-executable instructions (e.g., C or C++ running on the Solaris operating system available from Sun Microsystems Inc. of Palo Alto, California or the Linux operating system widely available from a number of vendors such as Red Hat, Inc. of Durham, North Carolina) to effect one or more aspects of the present invention. At least a portion of the machine executable instructions may be stored (temporarily or more permanently) on the one or more storage devices 1620 and/or may be received from an external source via one or more input interface units 1630.

In one embodiment, the machine 1600 may be one or more conventional personal computers. In this case, the processing units 1610 may be one or more microprocessors. The bus 1640 may include a system bus. The storage devices 1620 may include system memory, such as read only memory (ROM) and/or random access memory (RAM). The storage devices 1620 may also include a hard disk drive for reading from and writing to a hard disk, a magnetic disk drive for reading from or writing to a (e.g., removable) magnetic disk, and an optical disk drive for reading from or writing to a removable (magneto-) optical disk such as a compact disk or other (magneto-) optical media.

A user may enter commands and information into the personal computer through input devices 1632, such as a keyboard and pointing device (e.g., a mouse) for example. Other input devices such as a microphone, a joystick, a game pad, a satellite dish, a scanner, or the like, may also (or alternatively) be included. These and other input devices are often connected to the processing unit(s) 1610 through an appropriate interface 1630 coupled to the system bus 1640. The output devices 1634 may include a monitor or other type of display device, which may also be connected to the system bus 1640 via an appropriate interface. In addition to (or instead of) the monitor, the personal computer may include other (peripheral) output devices (not shown), such as speakers and printers for example.

## § 4.2.5 ALTERNATIVES

Although the invention was described with reference to click statistics, such as CTR, other user behavior (e.g., a user rating, a conversion, etc.) can be logged, stored, preprocessed, and/or used in a similar manner.

Although some data collection and processing was performed on the level of an ad group, such data collection and/or processing may be performed on individual ads, or on other collections of ads. For example, such data collection and/or processing may be performed per ad, per targeted concept, per ad presentation format (e.g., ad color scheme, ad text font, ad border), etc. Similarly, data may be collected and/or aggregated on a per document basis, a per host basis, and/or on the basis of some other document grouping (e.g., clustering, classification, etc.) function. A grouping of documents (i.e., a document set) will be a subset of all documents in a collection, such as a subset of all Web pages on the Web.

The invention is not limited to the embodiments described above and the inventors regard their invention as any described subject matter.

## § 4.3 CONCLUSIONS

As can be appreciated from the foregoing disclosure, the invention can be used to improve a content-targeted ad system.

**Claims**

**1.** A method performed by one or more computers, the method comprising:

determining, based on document relevance information, two or more concepts to which a document is relevant;
selecting a set of concept-relevant advertisements that, based on advertisement relevance information, have been identified as relevant to at least one of the two or more concepts;
receiving document-specific concept performance information for each of the two or more concepts, the document-specific concept performance information for each concept specifying performance measures for advertisements that were presented with the document and that were identified as relevant to the concept;
determining performance measures for each concept-relevant advertisement in the set based on the document-specific concept performance information for a concept to which the concept-relevant advertisement is relevant; selecting a concept-relevant advertisement to be provided with the document based on the adjusted performance measures.

2. The method of claim 1, wherein:

at least one concept-relevant advertisement has an initial performance measure; and
determining performance measures comprises adjusting the initial performance measure for the at least one concept-relevant advertisement.

3. The method of one of the preceding claims, wherein the advertisement performance information includes click statistics for the advertisements.

4. The method of one of the preceding claims, wherein determining performance measures comprises determining estimated costs per thousand impressions.

5. The method of one of the preceding claims, wherein selecting a concept relevant advertisement to be provided comprises selecting a concept-relevant advertisement having the determined performance measure that exceeds a threshold.

6. The method one of the preceding claims, wherein:

selecting a set of concept-relevant advertisements comprises selecting at least one advertisement that is relevant to two of the two or more concepts to which the document is relevant; and
determining performance measures for the at least one advertisement comprises determining the performance measure using the document-specific performance information for each of the two concepts.

7. The method of one of the preceding claims, further comprising determining a confidence parameter for the advertisement performance information using a quantity of impressions used to compute the received performance measures.

8. The method of one of the preceding claims, wherein selecting a set of concept-relevant advertisements includes selecting a particular advertisements that is associated with no user behavior data, wherein the user behavior data specifies a quantity of clicks that the particular advertisement has received.

9. The method of one of the preceding claims, wherein determining the two or more concepts to which the document is relevant comprises:

providing the content of the document to a PHIL server; and
receiving a list of matching concept clusters for the document.

10. The method of one of the preceding claims, further comprising:

determining that a particular concept-relevant advertisement in the set is a competitor of an entity associated with the document; and
filtering the particular concept-relevant advertisement from the set.

11. The method of one of the preceding claims, further comprising:

determining that a particular concept-relevant advertisement in the set is relevant to adult content;
determining that only family-safe advertisements are to be presented with the document; and
filtering the particular concept-relevant advertisement from the set.

12. A system comprising:

at least one processor;
means for determining a document-specific performance measure for an advertisement based on document-specific concept performance information for each of two or more concepts to which the document is relevant, the document-specific concept performance information being based on performances of other advertisements that have been presented with the document and that were identified as relevant to the concepts.

13. The system of claim 12, further adapted to execute the methods of any of claims 1 to 11.

EP 2 299 396 A1

ADVERTISERS ~110

AD ENTRY, MAINTENANCE AND DELIVERY SYSTEM(S) ~120

AD CONSUMERS ~130

## FIGURE 1

AD SERVER 210

CONTENT SERVER 230

E-MAIL SERVER 240

NETWORK(S) ~260

SEARCH ENGINE 220

200

250 ~ USER DEVICE (CLIENT)

## FIGURE 2

DOCUMENT (e.g., WEB PAGE) WITH CONTENT CONCERNING ONE OR MORE CONCEPTS — 310

330

AD INFORMATION

AD 1 INFORMATION

334 — AD RELEVANCE INFORMATION

336 — AD PERFORMANCE INFORMATION

332

320 — DOCUMENT RELEVANCE INFORMATION

340 — AD SCORING OPERATIONS

350

360 — AD ELIGIBILITY DETERMINATION OPERATIONS

RELEVANT/SORTED ADS
AD ID; AD SCORE

355

370 — AD POSITIONING/ ENHANCED FEATURE APPLICATION OPERATIONS

300

FIGURE 3A

EP 2 299 396 A1

FIGURE 3B

DOCUMENT (e.g., WEB PAGE) WITH CONTENT CONCERNING ONE OR MORE CONCEPTS

480

| AD GROUP | AD PERFORMANCE INFORMATION |
|---|---|
| ⋮ | ⋮ |
| ALL AD GROUPS | AVERAGE AD PERFORMANCE INFORMATION |

482          484

412
DOCUMENT IDENTIFIER

414
HOST IDENTIFIER

410

PERFORMANCE PARAMETER ESTIMATION (EXTRAPOLATION) OPERATIONS

496

AD PERFORMANCE INFORMATION ADJUSTMENT OPERATIONS

493

AD 1 INFORMATION

434
AD RELEVANCE INFORMATION

436
AD PERFORMANCE INFORMATION

432

420
DOCUMENT RELEVANCE INFORMATION

430
AD INFORMATION

440
AD SCORING OPERATIONS

491
AD SCORE ADJUSTMENT OPERATIONS

490
CANDIDATE AD SET EXPANSION OPERATIONS

450
RELEVANT/SORTED ADS

AD ID; AD SCORE

460
AD ELIGIBILITY DETERMINATION OPERATIONS

455

400

470
AD POSITIONING/ ENHANCED FEATURE APPLICATION OPERATIONS

FIGURE 4

EP 2 299 396 A1

22

FIGURE 5

FIGURE 6

FIGURE 7

886 ) TARGETING FUNCTION
PERFORMANCE INFORMATION
((DOCUMENT) SPECIFIC)

832
AD
INFORMATION

894 ) SCORING FUNCTION
SELECTION/ADJUSTMENT
OPERATIONS

SCORING
FUNCTION(S);
SCORING FUNCTION
PARAMETER(S) ) 895

820
DOCUMENT
INFORMATION

AD SCORING
OPERATIONS
840

AD; SCORE / 850

FIGURE 8

DATA COLLECTION
AND AGGREGATION
*900*

↓

LOG DOCUMENT IDENTIFIER,
AD (GROUP) IDENTIFIER,
IMPRESSION INFORMATION    910

↓

920

ACCEPT:
(A) DOCUMENT IDENTIFIER, AD (GROUP) IDENTIFIER, USER BEHAVIOR INFORMATION, COST INFORMATION;
(B) HOST IDENTIFIER,AD (GROUP) IDENTIFIER, USER BEHAVIOR INFORMATION, COST INFORMATION; AND/OR
(C) HOST IDENTIFER, TARGETING FEATURE, USER BEHAVIOR INFORMATION, COST INFORMATION,
CONTINUOUSLY OR INCREMENTALLY

↓

UPDATE COUNTS/STATISTICS
USING ACCEPTED AND
LOGGED INFORMATION    930

↓

THRESHOLD INFORMATION
USING COUNTS    940

↓

ADJUST (e.g., SMOOTH) DATA
USING CONFIDENCE MEASURE    950

↓

STORE UPDATED COUNTS/
STATISTICS (e.g., WITH
DOCUMENT IDENTIFIER OR HOST
IDENTIFIER AS A LOOKUP KEY)    960

↓

RETURN    970

FIGURE 9

CANDIDATE AD
SET EXPANSION
_1000_

ACCEPT
DOCUMENT
IDENTIFIER ⟍1010

DETERMINE K BEST PERFORMING
ADS (AD GROUPS) FOR DOCUMENT ⟍1020
USING STORED/AGGREGATED DATA

GENERATE A SET OF CANDIDATE
ADS INCLUDING AT LEAST THE K ⟍1030
DETERMINE ADS (AD GROUPS)

RETURN ⟍1040

# FIGURE 10

FIGURE 11

AD PERFORMANCE
INFORMATION ADJUSTMENT

1200

ACCEPT ELIGIBLE AD (GROUP)
CANDIDATES AND AD (GROUP)
PERFORMANCE INFORMATION

1210

ACCEPT DOCUMENT
IDENTIFIER/HOST IDENTIFIER

1220

FOR EACH ELIGIBLE AD
(GROUP) CANDIDATE

1230

ACCEPT DOCUMENT SPECIFIC/HOST SPECIFIC
PERFORMANCE INFORMATION FOR AD (GROUP)
(AND AVERAGE PERFORMANCE INFORMATION FOR
DOCUMENT/HOST OVER ALL ADS (AD GROUPS)

1240

ADJUST AD (GROUP) PERFORMANCE INFORMATION
USING ACCEPTED DOCUMENT SPECIFIC/HOST
SPECIFIC PERFORMANCE INFORMATION (AND
ACCEPTED AVERAGE PERFORMANCE INFORMATION)

1250

YES
ANOTHER AD (GROUP)
CANDIDATE?

1260

NO

RETURN

1270

FIGURE 12

DOCUMENT SPECIFIC/HOST SPECIFIC
SCORING FUNCTION SELECTION

1300

ACCEPT DOCUMENT IDENTIFIER/
HOST IDENTIFIER

1305

DETERMINE SCORING FUCNTION [THAT WAS
USED TO SERVE ADS] WITH THE BEST
PERFORMANCE FOR THE DOCUMENT/HOST

1310

USE DETERMINED
SCORING FUNCTION TO
SCORE CANDIDATE ADS

1315

RETURN 1320

# FIGURE 13A

DOCUMENT SPECIFIC/HOST SPECIFIC
SCORING FUNCTION ADJUSTMENT
1350

ACCEPT DOCUMENT IDENTIFIER/
HOST IDENTIFIER — 1355

FOR EACH COMPONENT/PARAMETER
OF AD SCORING FUNCTION — 1360

ACCEPT DOCUMENT SPECIFIC/HOST SPECIFIC
PERFORMANCE INFORMATION PARAMETER/
COMPONENT (AND AVERAGE PERFORMANCE
INFORMATION FOR DOCUMENT/HOST OVER ALL
PARAMETERS/COMPONENTS) — 1365

ADJUST IMPORTANCE OF COMPONENT/PARAMETER
IN SCORING FUNCTION USING ACCEPTED
DOCUMENT SPECIFIC/HOST SPECIFIC
PERFORMANCE INFORMATION (AND ACCEPTED
AVERAGE PERFORMANCE INFORMATION) — 1370

YES

ANOTHER
COMPONENT/
PARAMETER? — 1375

NO

RETURN — 1380

FIGURE 13B

CONCEPT/TOPIC BASED AD (GROUP)
PERFORMANCE ESTIMATION/ADJUSTMENT

1400

ACCEPT OR EXTRACT DOCUMENT
CONCEPTS/HOST CONCEPTS
1405

FOR EACH CONCEPT
1410

DETERMINE (FIRST SET OF)
CONCEPT-RELEVANT ADS
1415

FOR EACH DETERMINED AD
1420

LOOKUP DOCUMENT SPECIFIC / HOST SPECIFIC
PERFORMANCE INFORMATION FOR AD
1425

YES ← ANOTHER AD? 1430

NO

1435

ANY
ADS NOT DETERMINED TO BE CONCEPT-
RELEVANT BUT WITH HIGH PERFORMANCE
?
YES

NO

1445
DETERMINE CONCEPT PERFORMANCE
USING PERFORMANCE OF ADS
RELATED TO THE CONCEPT

DETERMINE
SECOND SET OF
ADS INCLUDING
FIRST SET OF
ADS AND OTHER,
HIGH
PERFORMANCE,
AD(S)

1450
FOR EACH DETERMINED AD
(WITHOUT PERFORMANCE
INFORMATION)

UPDATE PERFORMANCE
INFORMATION USING ESTIMATED
CONCEPT PERFORMANCE
1455

1440

YES ← ANOTHER AD? 1460

NO

YES ← ANOTHER CONCEPT? 1465

NO

1470

FIGURE 14    RETURN

# FIGURE 15

**1500**

DOCUMENT
{http://www.webshots.com/g/tr.html}

1510

1520

CONCEPT 1:
DESKTOP
WALLPAPER

(SCORE: 0.06%)

CONCEPT 2:
PHOTOGRAPHY/
ART

(SCORE: 3%)

CONCEPT 3:
VACATION/HOTEL

(SCORE: 8%)

1530

A1 — 0.01%

A2 — EST CTR

A3 — EST CTR = 0.008%

A4 — 6.0%

A5 — 1.0%

A6 — EST CTR

A7 — EST CTR = 5.0%

A8 — 15.0%

A9 — EST CTR

A10 — 6.0%

EP 2 299 396 A1

FIGURE 16

1632

INPUT DEVICE(S)

OUTPUT DEVICE(S)

1634

INPUT/OUTPUT
INTERFACE UNIT(S)
1630

SYSTEM BUS OR NETWORK 1640

1600

STORAGE DEVICE(S)
1620

PROCESSOR(S) 1610

Europäisches
Patentamt
European
Patent Office
Office européen
des brevets

## EUROPEAN SEARCH REPORT

Application Number

EP 10 01 0339

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2003/046161 A1 (KAMANGAR SALAR ARTA [US] ET AL) 6 March 2003 (2003-03-06) * abstract * * paragraph [0012] - paragraph [0015] * * paragraph [0028] - paragraph [0029] * * paragraph [0040] - paragraph [0043] * * paragraph [0045] - paragraph [0051] * * figures 1-4 * | 1-13 | INV. G06Q30/00 |
| X | US 2002/147637 A1 (KRAFT REINER [US] ET AL) 10 October 2002 (2002-10-10) * abstract * * paragraph [0047] - paragraph [0060] * * paragraph [0120] - paragraph [0139] * * figures 1-4 * | 1-13 | |
| X | US 2003/023598 A1 (JANAKIRAMAN JANANI [US] ET AL) 30 January 2003 (2003-01-30) * abstract * * paragraph [0033] - paragraph [0042] * * figure 3 * | 1-13 | |
| A | WO 03/023680 A (YAHOO & EXCL [US]; RADWIN MICHAEL [US]) 20 March 2003 (2003-03-20) * abstract * * paragraph [0022] - paragraph [0023] * * paragraph [0035] - paragraph [0041] * * paragraph [0053] - paragraph [0055] * * figures 1-9 * | 1-13 | TECHNICAL FIELDS SEARCHED (IPC) G06Q |
| A | WO 01/15053 A2 (SPINWAY INC [US]; LEVOW ZACHARY S [US]; ROBINSON DAN B [US]) 1 March 2001 (2001-03-01) * page 14, line 18 - page 15, line 28 * * figures 11,12 * | 1-13 | |
| A | WO 01/09789 A (TMP WORLDWIDE [US]) 8 February 2001 (2001-02-08) * the whole document * | 1-13 | |

The present search report has been drawn up for all claims

| Place of search | Date of completion of the search | Examiner |
|---|---|---|
| The Hague | 18 January 2011 | Cîrstet, Andrei |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 10 01 0339

This annex lists the patent family members relating to the patent documents cited in the above-mentioned European search report.
The members are as contained in the European Patent Office EDP file on
The European Patent Office is in no way liable for these particulars which are merely given for the purpose of information.

18-01-2011

| Patent document cited in search report | | Publication date | Patent family member(s) | | Publication date |
|---|---|---|---|---|---|
| US 2003046161 | A1 | 06-03-2003 | US | 2010274660 A1 | 28-10-2010 |
| US 2002147637 | A1 | 10-10-2002 | NONE | | |
| US 2003023598 | A1 | 30-01-2003 | NONE | | |
| WO 03023680 | A | 20-03-2003 | US<br>US | 2006026071 A1<br>2003050863 A1 | 02-02-2006<br>13-03-2003 |
| WO 0115053 | A2 | 01-03-2001 | AU | 6942300 A | 19-03-2001 |
| WO 0109789 | A | 08-02-2001 | AU | 6239000 A | 19-02-2001 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 48932203 P
- US 41353602 P
- US 31442702 A
- US 37590003 A
- US 45283003 A
- US 375900 A
- US 6285999 B
- US 6078916 A
- US 6014665 A
- US 6006222 A
- US 6182068 B
- US 6539377 B
- US 41614402 P
- US 413536 P
- US 314427 A

**Non-patent literature cited in the description**

- **S. BRIN ; L. PAGE.** The Anatomy of a Large-Scale Hypertextual Search Engine. *Seventh International World Wide Web Conference*
- **M. FANG ; N. SHIVAKUMAR ; H. GARCIA-MOLINA ; R. MOTWANI ; J. ULLMAN.** Computing Iceberg Queries Efficiently. *24th International Conference on Very Large Databases,* 24 August 1998